(19) 

**Europäisches Patentamt**
**European Patent Office**
**Office européen des brevets**

(11) **EP 4 564 634 A1**

(12) **EUROPEAN PATENT APPLICATION**
published in accordance with Art. 153(4) EPC

(43) Date of publication:
**04.06.2025 Bulletin 2025/23**

(21) Application number: **23844751.0**

(22) Date of filing: **05.01.2023**

(51) International Patent Classification (IPC):
*H02J 3/28* $^{(2006.01)}$   *H02J 3/24* $^{(2006.01)}$
*H02J 3/48* $^{(2006.01)}$

(52) Cooperative Patent Classification (CPC):
Y02E 70/30

(86) International application number:
**PCT/CN2023/070602**

(87) International publication number:
**WO 2024/021532 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2022 CN 202210876919**

(71) Applicant: **Sungrow Power Supply (Nanjing) Co., Ltd**
**Nanjing, Jiangsu 210012 (CN)**

(72) Inventors:
• **HUANG, Tian'gang**
**Nanjing, Jiangsu 210012 (CN)**
• **XIA, Yanhui**
**Nanjing, Jiangsu 210012 (CN)**

(74) Representative: **Zacco Norway AS**
**P.O. Box 488 Skøyen**
**0213 Oslo (NO)**

(54) **OSCILLATION SUPPRESSION SYSTEM AND OSCILLATION SUPPRESSION METHOD FOR ELECTRIC POWER SYSTEM**

(57) Disclosed in the present application are an oscillation suppression system and oscillation suppression method for an electric power system. The oscillation suppression system comprises a hydrogen production and hydrogen storage apparatus mounted at a sending-end power generation unit in an electric power system and a power generation apparatus mounted at a receiving-end power generation unit in the electric power system, wherein power generation fuel of the power generation apparatus is from the hydrogen production and hydrogen storage apparatus; and when active power oscillation occurs in the electric power system, the hydrogen production and hydrogen storage apparatus and the power generation apparatus are put into operation, such that a decrease in active power, which is transmitted by the sending-end power generation unit, is kept equal to an increase in active power, which is transmitted by the receiving-end power generation unit. Therefore, there is no need to cut off grid-connected power generation units in turns when active power oscillation occurs in an electric power system, and oscillation suppression can be directly performed by means of a hydrogen production and hydrogen storage apparatus and a power generation apparatus, thereby maintaining high-permeability wind/-light consumption.

FIG. 6

**Description**

The present disclosure claims the priority to Chinese Patent Application No. 202210876919.1, titled "OSCILLATION SUPPRESSION SYSTEM AND OSCILLATION SUPPRESSION METHOD FOR ELECTRIC POWER SYSTEM", filed on July 25, 2022 with the China National Intellectual Property Administration, which is incorporated herein by reference in its entirety.

**FIELD**

The present disclosure relates to the technical field of oscillation suppression based on hydrogen production, and in particular to an oscillation suppression system and method for a power system.

**BACKGROUND**

With the large-scale grid connection of high-penetration renewable energy and the widespread application of large-capacity power electronic equipment, especially in the western and northern regions of China, the problem of oscillation stability has become a potential risk. If the oscillation situation cannot be determined timely, and controlled quickly and accurately in real time, it may lead to economic losses to equipment manufacturers, power generation companies, power grid companies and the people.

At present, the oscillation of the power system is generally determined by monitoring active power fluctuations of power generation units in the power system in real time. Once an oscillation response occurs, the grid-connected power generation units are removed in turns.

However, the method of removing the grid-connected power generation units in turns reduces the system penetration rate, which is not conducive to renewable energy integration. Furthermore, since the renewable energy power generation units are connected to the power grid through converters, frequent power interactions occur among the converters and between the converters and the AC-DC hybrid power grid, so that the oscillation may be aggravated after removing some power generation units.

**SUMMARY**

Based on the shortcomings of the above-mentioned conventional technology, an oscillation suppression system and method for a power system are provided in the present disclosure to solve the problem that the method for removing the grid-connected power generation units in turns reduces the system penetration rate and is not conducive to the renewable energy integration, and the problem that since the renewable energy power generation units are connected to the power grid through converters, frequent power interactions occur among the converters and between the converters and the AC-DC hybrid power grid, so that the oscillation may be aggravated after removing some power generation units.

To achieve the above objectives, the following technical solutions are provided according to the present disclosure.

In a first aspect, an oscillation suppression system for a power system is provided in the present disclosure. The oscillation suppression system includes: a hydrogen production and storage apparatus arranged at a sending-end power generation unit of the power system, and a power generation apparatus arranged at a receiving-end power generation unit of the power system.

Power generation fuel of the power generation apparatus is provided by the hydrogen production and storage apparatus, the hydrogen production and storage apparatus and the power generation apparatus are activated when active power oscillation occurs in the power system, to maintain that reduction in active power of the sending-end power generation unit equals to increase in active power of the receiving-end power generation unit.

In an embodiment, in the oscillation suppression system for the power system, the hydrogen production and storage apparatus and the power generation apparatus are deactivated when no active power oscillation occurs in the power system.

In an embodiment, in the oscillation suppression system for the power system, the sending-end power generation unit has power flow outflowing from a critical tie line interface of the power system, and the receiving-end power generation unit has power flow inflowing into the critical tie line interface of the power system.

In an embodiment, in the oscillation suppression system for the power system, the critical tie line interface of the power system is generated by:

performing a power flow topology analysis on the power system to obtain a universal set of cut sets of the power system; and

performing a calculation based on a preset universal set of faults and the universal set of cut sets of the power system, to obtain the critical tie line interface of the power system.

In an embodiment, in the oscillation suppression system for the power system, the performing the calculation based on the preset universal set of faults and the universal set of cut sets of the power system, to obtain the critical tie line interface of the power system includes:

determining critical cut sets corresponding to respective examples in the preset universal set of faults;

for each critical cut set, adding risk values of examples corresponding to the critical cut set and obtaining a total risk value of the critical cut set; and

selecting a critical cut set with a max total risk value from the total risk values of respective critical cut sets, as the critical tie line interface of the power system.

In an embodiment, in the oscillation suppression system for the power system, the determining critical cut sets corresponding to respective examples in the preset universal set of faults includes:

for each example in the preset universal set of faults,

calculating comprehensive indexes of respective cut sets in the universal set of cut sets for the example, respectively; and

selecting a cut set with a maximum value of the comprehensive index for the example from the universal set of cut sets, as a critical cut set corresponding to the example.

In an embodiment, in the oscillation suppression system for the power system, the hydrogen production and storage apparatus includes: an apparatus for producing hydrogen by electrolyzing water and a hydrogen storage apparatus.

In an embodiment, in the oscillation suppression system for the power system, the apparatus for producing hydrogen by electrolyzing water is a proton exchange membrane electrolytic cell.

In an embodiment, in the oscillation suppression system for the power system, the power generation apparatus is a power generation apparatus with a hydrogen fuel cell.

In an embodiment, in the oscillation suppression system for the power system, the power generation apparatus with a hydrogen fuel cell is a proton exchange membrane fuel cell.

In an embodiment, in the oscillation suppression system for the power system, the power system is a wind turbine generator system, or a photovoltaic system, or a wind-solar hybrid generation system.

In a second aspect, an oscillation suppression method for a power system is provided in the present disclosure. The oscillation suppression method is applied to the oscillation suppression system for the power system according to the first aspect. The method includes:

monitoring whether active power oscillation occurs in the power system; and

activating the hydrogen production and storage apparatus and the power generation apparatus in the oscillation suppression system of the power system in response to monitoring that active power oscillation occurs in the power system.

In an embodiment, in the oscillation suppression method for the power system, in a case that no active power oscillation in the power system is monitored, the method further includes:

determining whether the hydrogen production and storage apparatus and the power generation device are in an operation state; and

deactivating the hydrogen production and storage apparatus and the power generation apparatus, in response to determining that the hydrogen production and storage apparatus and the power generation apparatus are in the operation state.

In an embodiment, in the oscillation suppression method for the power system, after activating the hydrogen production and storage apparatus and the power generation apparatus in the oscillation suppression system of the power system, the method further includes:
returning to the step of monitoring whether active power oscillation occurs in the power system.

In an embodiment, in the oscillation suppression method for the power system, the monitoring whether active power oscillation occurs in the power system includes:

determining whether an oscillation amplitude of the power system is greater than a preset oscillation amplitude;

determining whether an oscillation duration is greater than a preset duration, in a case that it is determined that the oscillation amplitude of the power system is greater than the preset oscillation amplitude;

determining that active power oscillation occurs in the power system, in a case that it is determined that the oscillation duration is greater than the preset duration; and

determining that no active power oscillation occurs in the power system, in a case that it is determined that the oscillation duration is less than or equal to the preset duration.

In an embodiment, in the oscillation suppression method for the power system, in the case that it is determined that the oscillation amplitude of the power system is less than or equal to the preset oscillation amplitude, the method further includes:
determining that no active power oscillation occurs in the power system.

An oscillation suppression system and method for a power system are provided in the present disclosure. The system includes: a hydrogen production and storage apparatus arranged at a sending-end power generation unit of the power system, and a power generation apparatus arranged at a receiving-end power generation unit of the power system. Power generation fuel of the power generation apparatus is provided by the hydrogen production and storage apparatus. The hydrogen production and storage apparatus and the power generation apparatus are activated when active power oscillation occurs in the power system, to maintain that reduction in active power of the sending-end power generation unit equals to increase in active power of the receiving-end power generation unit. With the system and method, the oscillation can be suppressed with the hydrogen production and storage apparatus and the power generation apparatus, instead of removing the grid-connected power generation units in turns when oscillation occurs in the power system. The system and method in the present disclosure guarantee high penetration rate of wind-solar integration, and solve the problem that the method for removing the grid-connected power generation units in turns reduces the system penetration rate and is not conducive to the renewable energy integration, and the problem that since the renewable energy power generation units are connected to the power grid through converters, frequent power interactions occur among the converters and between the converters and the AC-DC hybrid power grid, so that the oscillation may be aggravated after removing some power generation units.

## BRIEF DESCRIPTION OF THE DRAWINGS

In order to describe the technical solutions in the embodiments of the present disclosure or in the conventional technology more clearly, the drawings for describing the embodiments or the conventional technology are briefly introduced hereinafter. Apparently, the drawings in the following description show merely the embodiments of the present disclosure, and those skilled in the art can obtain other drawings based on these drawings without creative efforts.

FIG. 1 is a flowchart showing a generation process of a critical tie line interface in a power system according to an embodiment of the present disclosure;

FIG. 2 is a flowchart showing a specific generation process of a critical tie line interface according to an embodiment of the present disclosure;

FIG. 3 is a flowchart showing an oscillation suppression method for a power system according to an embodiment of the present disclosure;

FIG. 4 and FIG. 5 are two flowcharts of monitoring active power oscillation according to another embodiment of the present disclosure; and

FIG. 6 and FIG. 7 are two flowcharts of oscillation suppression methods for power systems according to an embodiment of the present disclosure.

## DETAILED DESCRIPTION

The solutions in embodiments of the present disclosure will be described clearly and completely hereinafter in conjunction with the accompanying drawings in the embodiments of the present disclosure. It is apparent that the described embodiments are only a part of the embodiments of the present disclosure, which are not all of the embodiments. Based on the embodiments of the present disclosure, all other embodiments obtained by those skilled in the art without any creative work fall into the protection scope of the present disclosure.

An oscillation suppression system for a power system is provided in the present disclosure, to solve the problem that the method for removing the grid-connected power generation units in turns reduces the system penetration rate and is not conducive to the renewable energy integration, and the problem that since the renewable energy power generation units are connected to the power grid through converters, frequent power interactions occur among the converters and between the converters and the AC-DC hybrid power grid, so that the oscillation may be aggravated after removing some power generation units.

The oscillation suppression system for the power system mainly includes: a hydrogen production and storage apparatus arranged at a sending-end power generation unit of the power system, and a power generation apparatus arranged at a receiving-end power generation unit of the power system.

Power generation fuel of the power generation apparatus is provided by the hydrogen production and storage apparatus, the hydrogen production and storage apparatus and the power generation apparatus are activated when active power oscillation occurs in the power system, to maintain that reduction in active power of the sending-end power generation unit equals to increase in active power of the receiving-end power generation unit.

In an embodiment, the hydrogen production and storage apparatus may include: an apparatus for producing hydrogen by electrolyzing water and a hydrogen storage apparatus. In practical applications, the apparatus for producing hydrogen by electrolyzing water may be a proton exchange membrane electrolytic cell. However, the apparatus for producing hydrogen by electrolyzing water is not limited to this, which may also be other existing type of apparatus for producing hydrogen by electrolyzing water. The type of apparatus for producing hydrogen by electrolyzing water will not be limited in the disclosure specifically, all of which will fall within the protection scope of the present disclosure.

The power generation apparatus may be a power generation apparatus with a hydrogen fuel cell, which may specifically be a proton exchange membrane fuel cell. However, it is not limited to this, the power generation apparatus may be may also be other existing power generation apparatus with the hydrogen fuel cell, which will not be specifically limited here, and all falls within the protection scope of the present disclosure.

It should be noted that, the hydrogen production and storage apparatus may include: an apparatus for producing hydrogen by electrolyzing water and a hydrogen storage apparatus. Power generation fuel of the power generation apparatus is provided by the hydrogen production and storage apparatus.

In practical applications, the hydrogen production and storage apparatus and the power generation apparatus are deactivated when no active power oscillation occurs in the power system.

It should be noted that, in practical applications, the power system may be a wind turbine generator system, or a photovoltaic system, or a wind-solar hybrid generation system. However, it is not limited to this, the power system may also be other existing power systems, which are not specifically limited here, and all fall within the protection scope of the present disclosure.

In practical applications, the sending-end power generation unit has power flow outflowing from a critical tie line interface of the power system, and the receiving-end power generation unit has power flow inflowing into the critical tie line interface of the power system.

It should be noted that the power flow is a steady-state distribution of voltage (at each node) and power (including active power and reactive power) (in each branch) in the power system, which can be obtained by power flow calculation. Power flow calculation is to calculate each bus voltage, and the current, the power dissipation and the network loss of each branch in the steady-state operation of the power system through the known wiring method, parameters and operating conditions of the power grid.

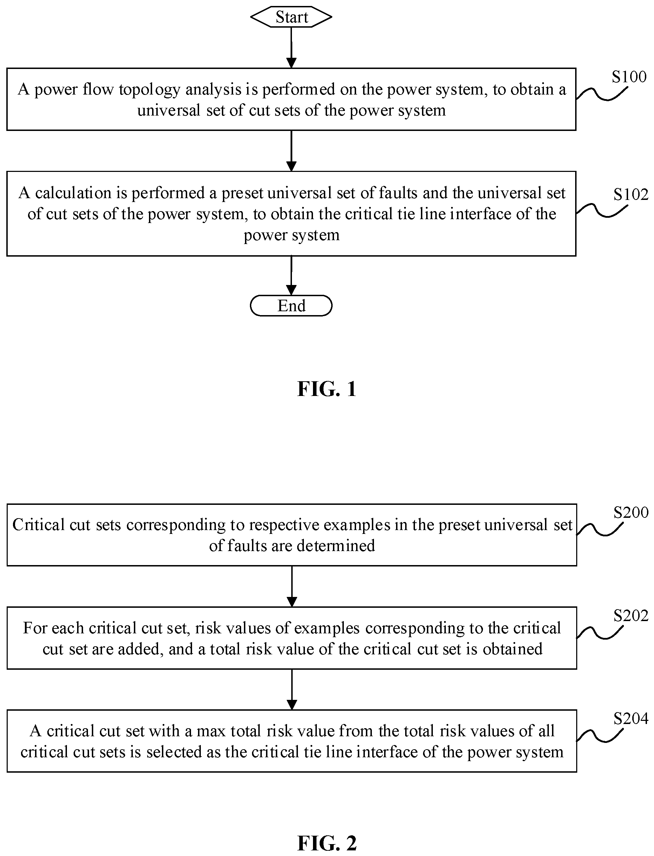

A generation process of a critical tie line interface in a power system is shown in FIG. 1. The generation process includes steps S100 and S102.

In step S100, a power flow topology analysis is performed on the power system, to obtain a universal set of cut sets of the power system.

In practical applications, the power flow topology analysis may be performed on the large power grid of the power system, to obtain the universal set of cut sets of the power system. The universal set of cut sets includes all possible cut sets in the power system. Specifically, the number of cut sets in the power system is generally greater than 1.

In step S102, a calculation is performed a preset universal set of faults and the universal set of cut sets of the power system, to obtain the critical tie line interface of the power system.

In practical applications, the step S102 of performing the calculation based on the preset universal set of faults and the universal set of cut sets of the power system to obtain the critical tie line interface of the power system mainly includes steps S200 to S204, as shown in FIG. 2.

In step S200, critical cut sets corresponding to respective examples in the preset universal set of faults are determined.

For each example in the preset universal set of faults, comprehensive indexes of respective cut sets in the universal set of cut sets for the example is calculated; a cut set with a maximum value of the comprehensive index for the example is selected from the universal set of cut sets, as the critical cut set corresponding to the example.

In an embodiment, a formula for calculating a comprehensive index of each cut set is:

$$\sigma_{C_i} = \frac{E_{k.C_i}}{E_{p.C_i}} .$$

In formula, $\sigma_{Ci}$ represents the comprehensive index of the cut set $C_i$ , i=1, 2, 3...n, $E_{k.C_i}$ is a sum of the generator kinetic energy corresponding to the cut set $C_i$ at the fault clearing time, $E_{p.C_i}$ is a sum of potential energy of branches corresponding to the cut set $C_i$.

$$E_{k.C_i} = \sum_{j=1}^{n_{C_i}} \frac{1}{2} M_j \omega_j^2$$

, $n_{C_i}$ is the number of generators corresponding to the cut set $C_i$, $M_j$ is the inertia of the generator j corresponding to the cut set $C_i$, $\omega_j$ is the rotor angular speed of the generator j corresponding to the cut set $C_i$ at the fault clearing time.

$$E_{p.C_i} = \sum_{k=1}^{m_{C_i}} \int_{\delta_k^S}^{\delta_k^U} \left[ P_k(u) - P_k^S \right] du$$

, $m_{C_i}$ is the number of branches corresponding to the cut set $C_i$, $\delta_k^S$ is the phase angle difference of the branch k corresponding to the cut set $C_i$ in the stable equilibrium state after the fault, $\delta_k^U$ is the phase angle difference of the branch k corresponding to the cut set $C_i$ in the unstable equilibrium state after the fault, $P_k(u)$ is the active power flow of the branch k corresponding to the cut set $C_i$ during the fault evolution process, $P_k^S$ is the active power flow of the branch k corresponding to the cut set $C_i$ in the stable equilibrium state after the fault.

After calculating comprehensive indexes of respective cut sets in the universal set of cut sets for each example in the preset universal set of faults, a cut set corresponding to $\sigma = \max\{\sigma_{C_i}\}$ is selected as a critical cut set corresponding to the example. Relevant lines in the critical cut set may be used as the critical tie line interface in this example.

In practical applications, the preset universal set of faults may be a set of one or more types of fault events in the power system, such as a three-phase permanent short-circuit fault, a single-phase permanent short-circuit fault, a power oscillation fault, etc. Specifically, in the present disclosure, at least one kind of fault needs to be configured in advance, and then all faults are composed into the preset universal set of faults.

In step S202, for each critical cut set, risk values of examples corresponding to the critical cut set are added, and a total risk value of the critical cut sets is obtained.

In practical applications, each example in the preset universal set of faults has a corresponding critical cut set, and each critical cut set also corresponds to at least one example. Therefore, for each critical cut set, the risk values of corresponding examples may be added to obtain the total risk value of the critical cut set.

In step S204, a critical cut set with a max total risk value from the total risk values of all critical cut sets is selected as the critical tie line interface of the power system.

In practical applications, the critical cut sets may be sorted in descending order of the total risk values. The critical cut set ranked first is selected as the critical tie line interface of the power system. However, it is not limited to this. The critical tie line interface can be selected by other existing manners. In this way, a critical cut set with the max total risk value from the total risk values of all critical cut sets is selected as the critical tie line interface of the power system. The specific selection process is not limited in the present disclosure, which all fall within the protection scope of the present disclosure.

It should be noted that the critical tie line interface of the power system can be generated through the above method or other existing methods. The generation method of the critical tie line interface is not specifically limited here, which all fall within the protection scope of the present disclosure.

The sending-end power generation unit and the receiving-end power generation unit of the power system can be determined, by the critical tie line interface of the power system, or by other methods based on the actual application environment and user requirement, which are also within the protection scope of the present disclosure.

Furthermore, the hydrogen production and storage apparatus and the power generation apparatus can be located at the sending-end power generation unit and the receiving-end power generation unit, respectively. Alternatively, the hydrogen production and storage apparatus and the power generation apparatus can be located based on actual application conditions and user requirement, which all fall within the protection scope of the present disclosure.

Based on the above principle, an oscillation suppression system for a power system is provided in the present disclosure. The oscillation suppression system includes: a hydrogen production and storage apparatus arranged at a sending-end power generation unit of the power system, and a power generation apparatus arranged at a receiving-end power generation unit of the power system. Power generation fuel of the power generation apparatus is provided by the hydrogen production and storage apparatus. The hydrogen production and storage apparatus and the power generation apparatus are activated when active power oscillation occurs in the power system, to maintain that reduction in active power of the sending-end power generation unit equals to increase in active power of the receiving-end power generation unit. With the system, the oscillation can be suppressed with the hydrogen production and storage apparatus and the power generation apparatus, instead of removing the grid-connected power generation units in turns when oscillation occurs in the power system. The oscillation can be suppressed with the hydrogen production and storage apparatus and the power generation apparatus. The system guarantees high penetration rate of wind-solar integration, and solve the problem that the method for removing the grid-connected power generation units in turns reduces the system penetration rate and is not conducive to the renewable energy integration, and the problem that since the renewable energy power generation units are connected to the power grid through converters, frequent power interactions occur among the converters and between the converters and the AC-DC hybrid power grid, so that the oscillation may be aggravated after removing some power generation units.

In addition, the oscillation suppression of the power system is realized in the present disclosure by applying the hydrogen production and storage apparatus and the power generation apparatus, filling the gap that the hydrogen production, hydrogen storage and hydrogen fuel cell are not applied to the research on the active power oscillation suppression of the power system. For each transient stability example, the critical tie line interface thereof is found from the perspective of kinetic-potential energy conversion. In addition, for the preset universal set of faults, the critical tie line interface of the large power grid with high penetration rate can be determined from the risk perspective of examples. Finally, when the active power oscillation is suppressed by the hydrogen production and storage apparatus and power generation apparatus, the operating state of wind power and photovoltaic power can be maintained without changing the penetration rate of wind-solar integration in the power system.

Based on the oscillation suppression system for the power system provided in the above embodiment, correspondingly, an oscillation suppression method for the power system is provided in another embodiment of the present disclosure. The oscillation suppression method is applied to the oscillation suppression for the power system as described in any of the above embodiments.

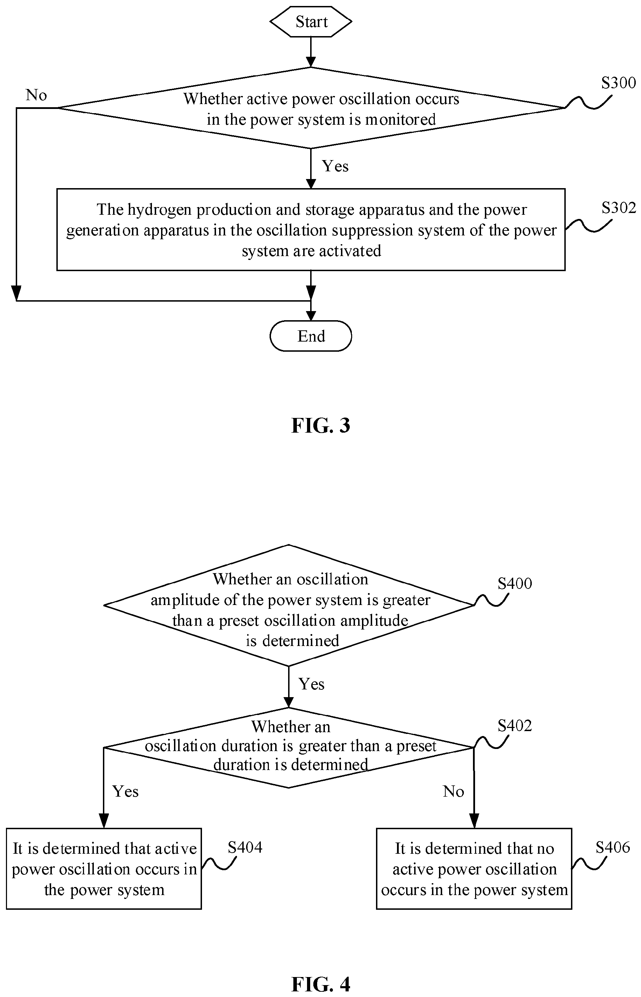

As shown in FIG. 3, the oscillation suppression method for the power system mainly includes steps S300 and S302.

In step S300, whether active power oscillation occurs in the power system is monitored.

In practical applications, the step S300 of monitoring whether active power oscillation occurs in the power system can be performed by the specific process as shown in FIG. 4. The specific process mainly includes steps S400 to S406.

In step S400, whether an oscillation amplitude of the power system is greater than a preset oscillation amplitude is determined.

The specific value of the preset oscillation amplitude may be determined based on specific application conditions and user requirements, which is not specifically limited herein and all fall within the protection scope of the present disclosure.

In some embodiments, the preset oscillation amplitude can be obtained through offline simulation.

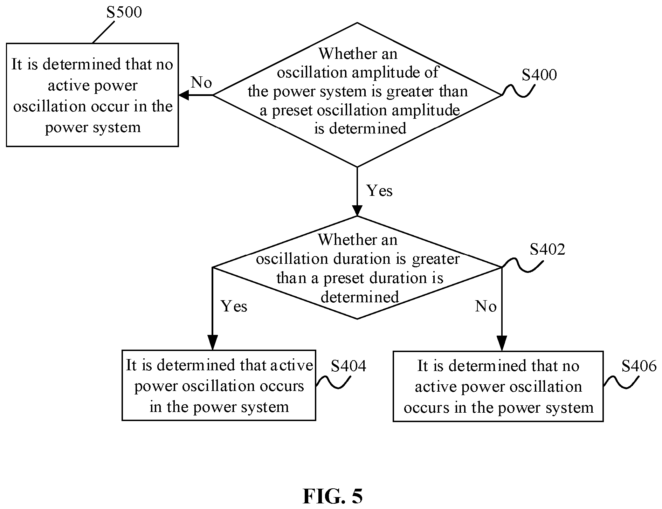

In practical applications, after step S400 of determining whether the oscillation amplitude of the power system is greater than the preset oscillation amplitude, as shown in FIG. 5, the method further includes: directly determining that no active power oscillation occur in the power system if it is determined that the oscillation amplitude of the power system is not greater than the preset oscillation amplitude, that is, step S500.

If it is determined that the oscillation amplitude of the power system is greater than the preset oscillation amplitude, that is, the determination result is yes, step S402 is executed.

In step S402, whether an oscillation duration is greater than a preset duration is determined.

The specific value of the preset duration may be determined based on specific application conditions and user requirements, which is not specifically limited here and all fall within the protection scope of the present disclosure.

In some embodiments, the preset duration can also be obtained through offline simulation.

Step S404 is executed if it is determined that the oscillation amplitude of the power system is greater than the preset oscillation amplitude, and Step S406 is executed if it is determined that the oscillation duration is less than or equal to the preset duration.

In step S404, it is determined that active power oscillation occurs in the power system.

In practical applications, it is determined that the oscillation amplitude of the power system is greater than the preset oscillation amplitude and the oscillation duration is greater than the preset duration. In this case, a high probability of active power oscillation exists in the power system. Thus, it can be determined that active power oscillation occurs in the power system.

In step S406, it is determined that no active power oscillation occurs in the power system.

In practical applications, when it is determined that the oscillation amplitude of the power system is greater than the preset oscillation amplitude, but the oscillation duration is not greater than the preset duration, it means that the power system only oscillates temporarily, and the oscillation will be eliminated soon. The probability of active power oscillation is low. Thus, it can be determined that no active power oscillation occurs in the power system.

If it is determined that active power oscillation occurs in the power system, step S302 is executed. If it is determined no active power oscillation occurs in the power system, no action is required.

It should be noted that in some embodiments, a built-in wide-area monitoring system of the power system can be used to monitor whether active power oscillation occurs in the power system. Moreover, after monitoring the occurrence of active power oscillation in the power system, early warning can be issued in time.

In step S302, the hydrogen production and storage apparatus and the power generation apparatus in the oscillation suppression system of the power system are activated.

In practical applications, when it is monitored that active power oscillation occurs in the power system, the hydrogen production and storage apparatus in the oscillation suppression system of the power system can be activated by issuing control instructions, so that the hydrogen production and storage apparatus is in the operation state. The hydrogen production and storage apparatus produces and stores hydrogen while absorbing the reactive power of the power system, reducing the terminal voltage of the sending-end power generation unit in the power system and reducing the active power transmitted by the sending-end power generation unit. The power generation apparatus is activated to convert hydrogen energy into electrical energy. At the same time, an inverter of the hydrogen fuel cell is used to transmit reactive power to the power system, which increases the terminal voltage of the receiving-end power generation unit and increases the active power transmitted by the receiving-end power generation unit. The consistency of the hydrogen production power of the hydrogen production and storage apparatus and the generated power of the power generation apparatus is maintained, and the consistency of the reduced power of the sending-end power generation unit and the increased power of the receiving-end power generation unit in the power system is maintained. Thus, the real-time balance of the active power of the large power grid is met.

Based on the above principle, in the oscillation suppression method for the power system provided in this embodiment, after active power oscillation in the power system is monitored, the hydrogen production and storage apparatus and the power generation apparatus in the oscillation suppression system of the power system are activated to produce and store hydrogen, and absorb the reactive power of the power system. Thus, the terminal voltage of the sending-end power generation unit in the power system and the active power transmitted by the sending-end power generation unit are reduced. The inverter of the hydrogen fuel cell converts hydrogen energy into electrical energy, and delivers reactive power to the power system. Thus, the terminal voltage of the receiving-end power generation unit and the active power transmitted by the receiving-end power generation unit are increased. Thus, the consistency of the hydrogen production power of the hydrogen production and storage apparatus and the generated power of the power generation apparatus is maintained, as well as the consistency of the reduced power of the sending-end power generation unit and the increased power of the receiving-end power generation unit in the power system is maintained. Thus, the real-time balance of the active power of the large power grid is met, solving the existing problem that the method for removing the grid-connected power generation units in turns reduces the system penetration rate and is not conducive to the renewable energy integration, and the problem that since the renewable energy power generation units are connected to the power grid through converters, frequent power interactions occur among the converters and between the converters and the AC-DC hybrid power grid, so that the oscillation may be aggravated after removing some power generation units.

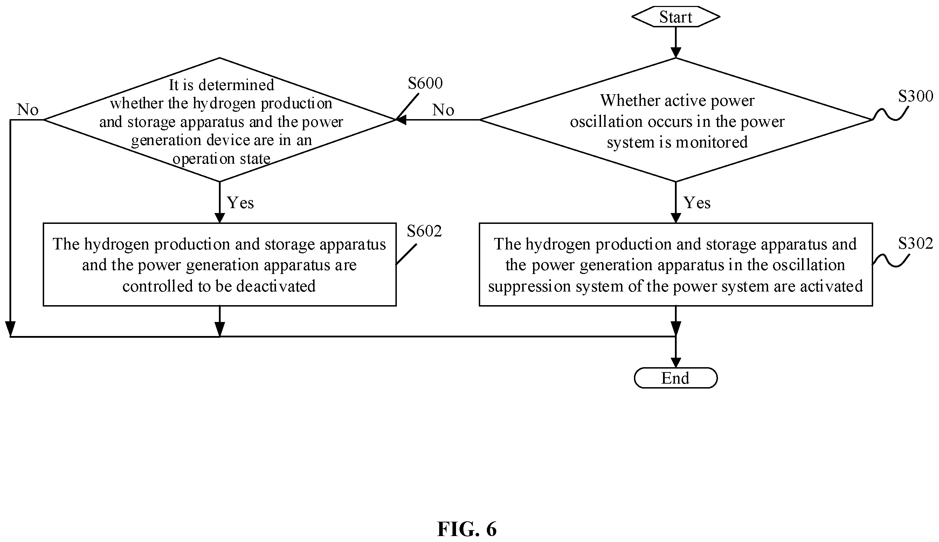

Optionally, in another embodiment of the present disclosure, after step S300 of monitoring whether active power oscillation occurs in the power system, if no active power oscillation in the power system is monitored, the method may include the steps S600 and S602, as shown in FIG. 6.

In step S600, it is determined whether the hydrogen production and storage apparatus and the power generation device are in an operation state.

In practical applications, whether the hydrogen production and storage apparatus and the power generation apparatus are in the operation state may be determined by obtaining operating parameters of the hydrogen production and storage apparatus and the power generation apparatus. However, it is not limited to this, and other existing methods can also be used to determine whether the hydrogen production and storage apparatus and the power generation apparatus are in the operation state, which all fall within the protection scope of the present disclosure.

Step S602 is executed if it is determined that the hydrogen production and storage apparatus and the power generation device are in the operation state. No action is required if it is determined that the hydrogen production and storage apparatus and the power generation device are not in the operation state.

In step S602, the hydrogen production and storage apparatus and the power generation apparatus are controlled to be deactivated.

In practical applications, no active power oscillation in the power system is monitored. In this case, the power system is currently in a normal operation state.

After determining that the hydrogen production and storage apparatus and the power generation apparatus are in the operation state, the hydrogen production and storage apparatus and the power generation apparatus can be controlled to be deactivated at the same time. That is, the apparatus for producing hydrogen by electrolyzing water and the power generation apparatus with the hydrogen fuel cell are shut down at the same time, and the power supply mode is restored to the power system, so as to avoid the continuous operation of the hydrogen production and hydrogen storage apparatus and the power generation apparatus from interfering with the power system and causing active power oscillation in the power system.

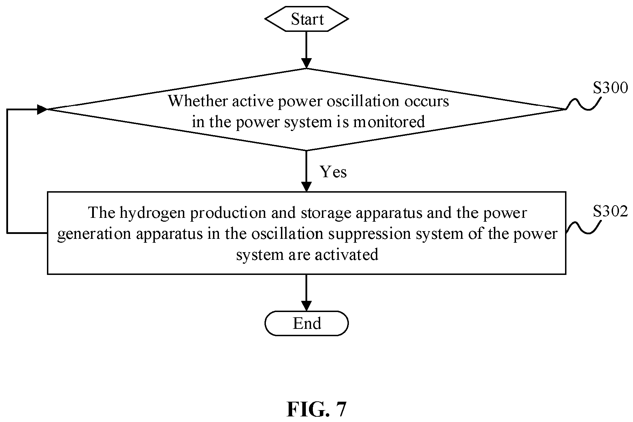

In another embodiment of the present disclosure, after step S302 of activating the hydrogen production and storage apparatus and the power generation apparatus in the oscillation suppression system of the power system, as shown in FIG. 7, the oscillation suppression method for the power system further includes: returning to the step of monitoring whether active power oscillation occurs in the power system, that is, returning to step S300.

In practical applications, after activating the hydrogen production and storage apparatus and power generation apparatus in the oscillation suppression system of the power system, the step of monitoring whether active power oscillation occurs in the power system can be performed again, to periodically monitor the power system. In this way, when no active power oscillation in the power system is monitored, the hydrogen production and storage apparatus and power generation apparatus are controlled in a timely manner, further ensuring the reliability of the oscillation suppression method for the power system.

Based on the oscillation suppression system and method for the power system shown in the above embodiments, it is assumed that the power system is a wind-solar generation system with high permeability, the hydrogen production and storage apparatus includes an apparatus for producing hydrogen by electrolyzing water and a hydrogen storage apparatus, and the power generation apparatus is a power generation apparatus with a hydrogen fuel cell. In this case, the oscillation suppression method of the power system includes the following implementation process.

When the oscillation amplitude $A > \varepsilon_1$ and the duration $T > \varepsilon_2$ of the system, the apparatus for producing hydrogen by electrolyzing water is activated to produce hydrogen, and the hydrogen is stored in the hydrogen storage apparatus. The power for producing hydrogen by electrolyzing water is used to absorb reactive power of the system, to reduce the terminal voltage of the sending-end power generation unit and the active power transmitted by the sending-end power generation unit. At the same time, the power generation apparatus with the hydrogen fuel cell is activated to take hydrogen from the hydrogen storage apparatus, and the hydrogen energy is converted into electrical energy. The inverter for the hydrogen fuel cell is used to transmit reactive power to the system, to increase the terminal voltage of the receiving-end power generation unit and the active power transmitted by the receiving-end power generation unit. The consistency of the hydrogen production power by electrolyzing water and the generation power of the hydrogen fuel cell is maintained, and the consistency of reduced active power of the sending-end power generation unit and the increased active power of the receiving-end power generation unit is maintained, meets the real-time balance of active power in large power grid. When the oscillation amplitude $A < \varepsilon_3$ and the duration $T < \varepsilon_4$, the apparatus for producing hydrogen by electrolyzing water and the power generation apparatus with the hydrogen fuel cell are shut down at the same time, thereby returning to the high-penetration wind-solar power supply mode. $\varepsilon_1$, $\varepsilon_2$, $\varepsilon_3$, $\varepsilon_4$ are set thresholds, which can be set through offline simulation.

It should be noted that the above example is only a specific application example provided by the present disclosure, but the application examples in actual applications are not limited to the above, and can also be modified according to the application environment and user needs, as long as the implementation method is consistent with the principles and ideas provided by the present disclosure, and are all within the protection scope of the present disclosure.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may use different methods to implement the described functions for each specific application, but such implementation should not be regarded as exceeding the scope of the present disclosure.

The relationship terminologies such as "first" and "second" herein are only used to distinguish one entity or operation from another, rather than to necessitate or imply that the actual relationship or order exists between the entities or operations. Moreover, the terms "comprises", "includes", or any other variation are intended to cover a non-exclusive inclusion such that a process, method, article, or apparatus comprising a set of elements includes not only those elements but also other elements not expressly listed, and may also include elements inherent to such a process, method, article, or apparatus. Unless expressively limited, the statement "including a..." does not exclude the case that other similar elements may exist in the process, method, article or device including the series of elements.

According to the embodiments disclosed described above, those skilled in the art can implement or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

**Claims**

1. An oscillation suppression system for a power system, comprising: a hydrogen production and storage apparatus arranged at a sending-end power generation unit of the power system, and a power generation apparatus arranged at a receiving-end power generation unit of the power system,
   wherein power generation fuel of the power generation apparatus is provided by the hydrogen production and storage apparatus, the hydrogen production and storage apparatus and the power generation apparatus are activated in a case that active power oscillation occurs in the power system, to maintain that reduction in active power transmitted by the sending-end power generation unit equals to increase in active power transmitted by the receiving-end power generation unit.

2. The oscillation suppression system for the power system according to claim 1, wherein the hydrogen production and storage apparatus and the power generation apparatus are deactivated in a case that no active power oscillation occurs in the power system.

3. The oscillation suppression system for the power system according to claim 1, wherein the sending-end power generation unit has power flow outflowing a critical tie line interface of the power system, and the receiving-end power generation unit has power flow inflowing into the critical tie line interface of the power system.

4. The oscillation suppression system for the power system according to claim 3, wherein the critical tie line interface is generated by:

   performing a power flow topology analysis on the power system, to obtain a universal set of cut sets of the power system; and
   performing a calculation based on a preset universal set of faults and the universal set of cut sets, to obtain the critical tie line interface of the power system.

**5.** The oscillation suppression system for the power system according to claim 4, wherein the performing the calculation based on a preset universal set of faults and the universal set of cut sets, to obtain the critical tie line interface of the power system comprises:

determining critical cut sets corresponding to respective examples in the preset universal set of faults;

for each critical cut set, adding risk values of examples corresponding to the critical cut set and obtaining a total risk value of the critical cut set; and

selecting a critical cut set with a max total risk value from the total risk values of respective critical cut sets, as the critical tie line interface of the power system.

**6.** The oscillation suppression system for the power system according to claim 5, wherein the determining critical cut sets corresponding to respective examples in the preset universal set of faults comprises:

for each example in the preset universal set of faults,

calculating comprehensive indexes of respective cut sets in the universal set of cut sets for the example, respectively; and

selecting a cut set with a maximum value of the comprehensive index for the example from the universal set of cut sets, as a critical cut set corresponding to the example.

**7.** The oscillation suppression system for the power system according to any one of claims 1 to 6, wherein the hydrogen production and storage apparatus comprises: an apparatus for producing hydrogen by electrolyzing water and a hydrogen storage apparatus.

**8.** The oscillation suppression system for the power system according to claim 7, wherein the apparatus for producing hydrogen by electrolyzing water is a proton exchange membrane electrolytic cell.

**9.** The oscillation suppression system for the power system according to any one of claims 1 to 6, wherein the power generation apparatus is a power generation apparatus with a hydrogen fuel cell.

**10.** The oscillation suppression system for the power system according to claim 9, wherein the power generation apparatus with the hydrogen fuel cell is a proton exchange membrane fuel cell.

**11.** The oscillation suppression system for the power system according to any one of claims 1 to 6, wherein the power system is a wind turbine generator system, or a photovoltaic system, or a wind-solar hybrid generation system.

**12.** An oscillation suppression method for a power system, applied to the oscillation suppression system for the power system according to any one of claims 1 to 11, wherein the oscillation suppression method comprises:

monitoring whether active power oscillation occurs in the power system; and

activating the hydrogen production and storage apparatus and the power generation apparatus in the oscillation suppression system of the power system, in a case that it is monitored that active power oscillation occurs in the power system.

**13.** The oscillation suppression method for the power system according to claim 12, wherein in a case that no active power oscillation in the power system is monitored, the oscillation suppression method further comprises:

determining whether the hydrogen production and storage apparatus and the power generation device are in an operation state; and

deactivating the hydrogen production and storage apparatus and the power generation apparatus, in response to determining that the hydrogen production and storage apparatus and the power generation apparatus are in the operation state.

**14.** The oscillation suppression method for the power system according to claim 12, wherein after activating the hydrogen production and storage apparatus and the power generation apparatus in the oscillation suppression system of the power system, the oscillation suppression method further comprises:

returning to the step of monitoring whether active power oscillation occurs in the power system.

**15.** The oscillation suppression method for the power system according to claim 12, wherein the monitoring whether active power oscillation occurs in the power system comprises:

determining whether an oscillation amplitude of the power system is greater than a preset oscillation amplitude;

determining whether an oscillation duration is greater than a preset duration, in a case that it is determined that the oscillation amplitude of the power system is greater than the preset oscillation amplitude;

determining that active power oscillation occurs in the power system, in a case that it is determined that the oscillation duration is greater than the preset duration; and
determining that no active power oscillation occurs in the power system, in a case that it is determined that the oscillation duration is less than or equal to the preset duration.

16. The oscillation suppression method for the power system according to claim 15, wherein in a case that it is determined that the oscillation amplitude of the power system is less than or equal to the preset oscillation amplitude, the oscillation suppression method further comprises:
determining that no active power oscillation occurs in the power system.

```
                    ⟨ Start ⟩
                        │
                        ▼
┌───────────────────────────────────────────────────────┐          S100
│ A power flow topology analysis is performed on the     │
│ power system, to obtain a                              │  ∿
│ universal set of cut sets of the power system          │
└───────────────────────────────────────────────────────┘
                        │
                        ▼
┌───────────────────────────────────────────────────────┐          S102
│ A calculation is performed a preset universal set of   │
│ faults and the universal set of cut sets of the power  │  ∿
│ system, to obtain the critical tie line interface of   │
│ the power system                                       │
└───────────────────────────────────────────────────────┘
                        │
                        ▼
                   ( End )
```

**FIG. 1**

```
┌───────────────────────────────────────────────────────┐          S200
│ Critical cut sets corresponding to respective examples │
│ in the preset universal set of faults are determined   │  ∿
└───────────────────────────────────────────────────────┘
                        │
                        ▼
┌───────────────────────────────────────────────────────┐          S202
│ For each critical cut set, risk values of examples     │
│ corresponding to the critical cut set are added, and a │  ∿
│ total risk value of the critical cut set is obtained   │
└───────────────────────────────────────────────────────┘
                        │
                        ▼
┌───────────────────────────────────────────────────────┐          S204
│ A critical cut set with a max total risk value from    │
│ the total risk values of all critical cut sets is      │  ∿
│ selected as the critical tie line interface of the     │
│ power system                                           │
└───────────────────────────────────────────────────────┘
```

**FIG. 2**

Start

Whether active power oscillation occurs in the power system is monitored — S300

No

Yes

The hydrogen production and storage apparatus and the power generation apparatus in the oscillation suppression system of the power system are activated — S302

End

**FIG. 3**

Whether an oscillation amplitude of the power system is greater than a preset oscillation amplitude is determined — S400

Yes

Whether an oscillation duration is greater than a preset duration is determined — S402

Yes

No

It is determined that active power oscillation occurs in the power system — S404

It is determined that no active power oscillation occurs in the power system — S406

**FIG. 4**

S500

It is determined that no active power oscillation occur in the power system

No ← Whether an oscillation amplitude of the power system is greater than a preset oscillation amplitude is determined — S400

Yes

Whether an oscillation duration is greater than a preset duration is determined — S402

Yes

No

It is determined that active power oscillation occurs in the power system — S404

It is determined that no active power oscillation occurs in the power system — S406

**FIG. 5**

EP 4 564 634 A1

Start

Whether active power
oscillation occurs in the power
system is monitored

S300

No

It is determined
whether the hydrogen production
and storage apparatus and the power
generation device are in an
operation state

S600

No

Yes

The hydrogen production and storage apparatus
and the power generation apparatus are
controlled to be deactivated

S602

Yes

The hydrogen production and storage apparatus and
the power generation apparatus in the oscillation
suppression system of the power system are activated

S302

End

**FIG. 6**

15

```
        ┌─────────────┐
        ⟨    Start    ⟩
        └─────────────┘
               │
               ▼
    ◇───────────────────────────◇      S300
    Whether active power oscillation occurs
      in the power system is monitored
    ◇───────────────────────────◇
               │
               │ Yes
               ▼
    ┌─────────────────────────────────────┐
    │ The hydrogen production and storage  │   S302
    │ apparatus and the power generation   │
    │ apparatus in the oscillation         │
    │ suppression system of the power      │
    │ system are activated                 │
    └─────────────────────────────────────┘
               │
               ▼
        (     End     )
```

**FIG. 7**

## INTERNATIONAL SEARCH REPORT

| International application No. |
| --- |
| **PCT/CN2023/070602** |

| A. | CLASSIFICATION OF SUBJECT MATTER |
| --- | --- |

H02J3/28(2006.01)i;H02J3/24(2006.01)i;H02J3/48(2006.01)i

According to International Patent Classification (IPC) or to both national classification and IPC

| B. | FIELDS SEARCHED |
| --- | --- |

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNTXT, DWPI, ENTXT, ENTXTC, VEN, WPABS, WPABSC: 消纳, 震荡, 振荡, 暂态, 动态, 氢, 燃料, 主导, 关键, 潮流, 断面, 割集, oscillat+, suppres+, transient+, key, transmission

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115117903 A (SUNGROW POWER SUPPLY (NANJING) CO., LTD.) 2022-09-27 (2022-09-27) <br> claims 1-16 | 1-16 |
| X | CN 110707749 A (BRANCH COMPANY OF INNER MONGOLIA ELECTRIC POWER SCIENCE RESEARCH INSTITUTE; INNER MONGOLIA POWER (GROUP) CO., LTD.) 2020-01-17 (2020-01-17) <br> description, paragraphs 31-132, and figures 1-11 | 1-16 |
| X | CN 106230016 A (SHI RUIJING) 2016-12-14 (2016-12-14) <br> description, paragraphs 2-55, and figure 1 | 1-16 |
| A | CN 108493961 A (TSINGHUA UNIVERSITY) 2018-09-04 (2018-09-04) <br> entire document | 1-16 |
| A | CN 104767199 A (NORTH CHINA ELECTRIC POWER UNIVERSITY (BAODING)) 2015-07-08 (2015-07-08) <br> entire document | 1-16 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 April 2023** | **19 April 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2023/070602**

### C.    DOCUMENTS CONSIDERED TO BE RELEVANT

| Category* | Citation of document, with indication, where appropriate, of the relevant passages | Relevant to claim No. |
|---|---|---|
| A | CN 114374220 A (POWERCHINA HUADONG ENGINEERING CORP., LTD.) 2022-04-19 (2022-04-19)<br>entire document | 1-16 |
| A | CN 114614499 A (CHINA HUANENG CLEAN ENERGY RESEARCH INSTITUTE et al.) 2022-06-10 (2022-06-10)<br>entire document | 1-16 |
| A | US 2022166223 A1 (VARMA, Rajiv Kumar) 2022-05-26 (2022-05-26)<br>entire document | 1-16 |

Form PCT/ISA/210 (second sheet) (July 2022)

**INTERNATIONAL SEARCH REPORT**
Information on patent family members

International application No.

**PCT/CN2023/070602**

| Patent document cited in search report | | | Publication date (day/month/year) | Patent family member(s) | Publication date (day/month/year) |
|---|---|---|---|---|---|
| CN | 115117903 | A | 27 September 2022 | None | |
| CN | 110707749 | A | 17 January 2020 | None | |
| CN | 106230016 | A | 14 December 2016 | None | |
| CN | 108493961 | A | 04 September 2018 | None | |
| CN | 104767199 | A | 08 July 2015 | None | |
| CN | 114374220 | A | 19 April 2022 | None | |
| CN | 114614499 | A | 10 June 2022 | None | |
| US | 2022166223 | A1 | 26 May 2022 | None | |

Form PCT/ISA/210 (patent family annex) (July 2022)

**EP 4 564 634 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210876919